(19) Europäisches Patentamt
European Patent Office
Office européen des brevets

(11) Veröffentlichungsnummer: **0 281 960 B1**

(12) **EUROPÄISCHE PATENTSCHRIFT**

(45) Veröffentlichungstag der Patentschrift: **30.10.91**

(51) Int. Cl.5: **C10L 1/32**, B01F 17/00

(21) Anmeldenummer: **88103361.7**

(22) Anmeldetag: **04.03.88**

# (54) Dispergiermittel und ihre Verwendung in wässrigen Kohlesuspensionen.

(30) Priorität: **12.03.87 DE 3707941**

(43) Veröffentlichungstag der Anmeldung:
**14.09.88 Patentblatt 88/37**

(45) Bekanntmachung des Hinweises auf die Patenterteilung:
**30.10.91 Patentblatt 91/44**

(84) Benannte Vertragsstaaten:
**BE DE SE**

(56) Entgegenhaltungen:
**EP-A- 0 077 909**
**EP-A- 0 089 766**
**EP-A- 0 108 302**

(73) Patentinhaber: **Henkel Kommanditgesellschaft auf Aktien**
**Postfach 1100 Henkelstrasse 67**
**W-4000 Düsseldorf-Holthausen(DE)**

(72) Erfinder: **von Rybinski, Wolfgang, Dr.**
**Johannes-Hesse-Strasse 31**
**W-4000 Düsseldorf(DE)**
Erfinder: **Förster, Thomas, Dr.**
**Adalbert-Stifter-Strasse 15**
**W-4006 Erkrath(DE)**

**EP 0 281 960 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Dispergiermittel, die Ligninsulfonsäure und/oder deren Alkalimetall- bzw. Ammoniumsalze enthalten und ihre Verwendung in wäßrigen Kohlesuspensionen.

Im Zuge der zu erwartenden Verknappung von Rohöl als Brennstoff wegen des Rückgangs der förderwürdigen natürlichen Vorräte einerseits und der Notwendigkeit ihrer Nutzung als Chemierohstoff andererseits haben in jüngerer Zeit zunehmend Verfahren zur Energiegewinnung an Bedeutung gewonnen, in denen wäßrige Kohlesuspensionen einer Hochtemperaturverbrennung zugeführt werden. Derartige wäßrige Kohlesuspensionen bieten gegenüber Kohle in fester, wenn auch feinverteilter Form den großen Vorteil, daß sie sich mit relativ geringem Aufwand über längere Strecken in auch aus dem Transport von Rohöl bekannten Fördersystemen, beispielsweise Rohrleitungen oder Überlandpipelines fördern lassen. Nachteilig ist es jedoch, daß das gegenüber der Verbrennung inerte Dispersionsmittel Wasser den Brennwert derartiger wäßriger Kohlesuspensionen erniedrigt. Hinsichtlich des Kohlegehalts wäßriger Kohlesuspensionen muß - mit Rücksicht auf die Transportfähigkeit - ein zu hoher Kohlegehalt vermieden werden, während - mit Blick auf den Brennwert - ein möglichst hoher Kohlegehalt angestrebt wird.

Es ist aus dem Stand der Technik bekannt, wäßrigen Kohlesuspensionen Additive zuzusetzen, die die Fließfähigkeit beim Transport in Rohrleitungen oder Pipelines verbessern, andererseits aber eine Erhöhung des Kohlegehalts der wäßrigen Kohlesuspensionen erlauben und damit den Brennwert deutlich erhöhen. Derartige Additive verbessern auch die Verbrennungseigenschaften der wäßrigen Kohlesuspensionen. So ist es beispielsweise aus der DE-C 27 27 943, der EP-B 0 050 412, der EP-A 0 089 766 und der EP-A 0 092 353 bekannt, wäßrigen Kohlesuspensionen als Additive zur Verbesserung der Fließfähigkeit bei gleichzeitiger Erhöhung des Kohlegehalts organische Dispergiermittel zuzusetzen, die aus der Gruppe organischer Sulfonsäuren und/oder deren Alkalimetall- Erdalkalimetall- bzw. Ammoniumsalzen, insbesondere der Ligninsulfonsäure und deren entsprechenden Salzen, ausgewählt sind. Bei geeigneter Siebcharakteristik der für die Herstellung der Kohlesuspensionen verwendeten Kohle ließen sich gut pumpfähige Suspensionen mit Kohlegehalten im Bereich von 10 bis 50 Gew.-% herstellen.

Es wird jedoch allgemein angestrebt, zur Erhöhung des Brennwertes derartiger Suspensionen den Kohlegehalt weiter zu erhöhen, da ein wirtschaftlicher Einsatz von wäßrigen Kohlesuspensionen für großtechnische Verbrennungsprozesse zur Energiegewinnung erst ab einem Kohlegehalt von 65 Gew.-% Kohle, bezogen auf das Gesamtgewicht der Suspension, möglich ist. Zudem wird angestrebt, die Viskosität derartiger Suspensionen weiter zu verringern und damit eine bequeme Förderung auch durch Leitungen mit einem vergleichsweise geringen Querschnitt zu ermöglichen.

Überraschend wurde nun gefunden, daß die Viskosität wäßriger Kohlesuspensionen weiter verringert und der Feststoffanteil weiter erhöht werden kann, wenn man wäßrigen Kohlesuspensionen neben Alkalimetall- und/oder Erdalkalimetall-Ligninsulfonaten als Additiven Alkyletherphosphate als Co-Additive zusetzt.

Die Erfindung betrifft Dispergiermittel mit einem Gehalt an Ligninsulfonsäure und/oder deren wasserlöslichen Salzen, die dadurch gekennzeichnet sind, daß sie Ligninsulfonsäure und/oder deren Alkalimetall-, Erdalkalimetall- und/oder Ammoniumsalze, ein oder mehrere Alkyletherphosphate mit den allgemeinen Formeln (I) und/oder (II)

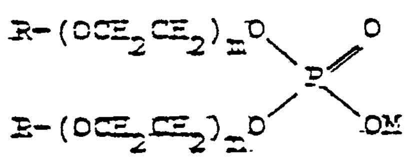

(I)

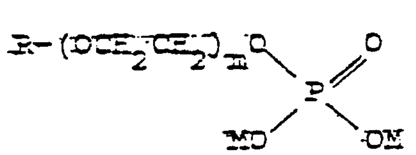

(II)

in denen

| | |
|---|---|
| R | für einen geradkettigen oder verzweigten Alkyl-oder Alkenylrest mit 8 bis 22 C-Atomen, |
| M | für Wasserstoff, Alkalimetall, Ammonium oder Erdalkalimetall und |
| m und n | für Zahlen im Bereich von 1 bis 15 stehen, und gegebenenfalls weitere, in derartigen Dispergiermitteln übliche Hilfsstoffe enthalten. |

Die Erfindung betrifft außerdem die Verwendung derartiger Dispergiermittel in wäßrigen Kohlesuspensionen.

Das erfindungsgemäße Dispergiermittel enthält als anionaktive, tensidartige Komponente eine oder mehrere Verbindungen aus der Gruppe Ligninsulfonsäure, Alkalimetallsalze der Ligninsulfonsäure, Erdalkalimetallsalze der Ligninsulfonsäure und Ammoniumsalze der Ligninsulfonsäure. Diese Verbindungen können in den Dispergiermitteln einzeln oder auch in Mischungen zweier oder mehrerer der genannten Verbindungen enthalten sein. Dabei ist das Mengenverhältnis der Einzelverbindungen zueinander unkritisch. Diese Verbindungen dienen in erster Linie dazu, die Grenzflächenspannung zwischen den Kohlepartikeln und der wäßrigen Phase zu erniedrigen und somit eine Benetzung der Oberfläche der Kohlepartikel herbeizuführen.

Als weitere essentielle Komponente enthalten die erfindungsgemäßen Dispergiermittel ein oder mehrere Alkyletherphosphate mit den allgemeinen Formeln (I) und (II)

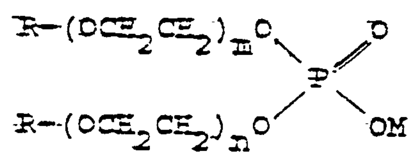

(I)

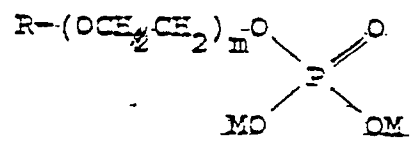

(II)

in denen

R für einen geradkettigen oder verzweigten Alkyl-oder Alkenylrest mit 8 bis 22 C-Atomen,
M für Wasserstoff, Alkalimetall, Ammonium oder Erdalkalimetall und
m und n für Zahlen im Bereich von 1 bis 15 stehen.

In den allgemeinen Formeln (I) und (II) kann R also die Bedeutungen n-Octyl, n-Nonyl, n-Decyl, n-Undecyl, n-Dodecyl, n-Tridecyl, n-Tetradecyl, n-Pentadecyl, n-Hexadecyl, n-Heptadecyl, n-Octadecyl, n-Nonadecyl, n-Eicosyl, n-Uneicosyl und n-Docosyl für die geradkettigen Alkylreste annehmen. Entsprechend kann R auch für die verzweigtkettigen Homologen der genannten n-Alkylreste oder auch für ein- oder mehrfach ungesättigte Reste stehen, die den genannten geradkettigen oder verzweigten Alkylresten in der Zahl der C-Atome entsprechen und an beliebiger Stelle in der Kette eine oder mehrere C=C-Bindung(en) enthalten. Da die dem Rest R in den allgemeinen Formeln (I) und (II) entsprechenden Ausgangsverbindungen jedoch aus dem Fettsäureanteil von Fetten und Ölen tierischen oder pflanzlichen Ursprungs stammen, in denen die Längen der Alkyl- oder Alkenylketten über einen mehr oder weniger großen Bereich der Kettenlänge gestreut sind, stehen üblicherweise die Reste R in den oben angegebenen allgemeinen Formeln (I) und (II) für Gemische von Alkyl- und Alkenylresten unterschiedlicher Struktur und Kettenlänge. Dabei ist es möglich, Verbindungen einzusetzen, die, je nach ihrer Herkunft, aus bestimmten nativen Fetten und Ölen Alkylreste R enthalten, die dem gesamten anfallenden Fettalkylrest-Spektrum solcher Fette und Öle entsprechen; es ist jedoch auch möglich, geeignete Fraktionen mit einem begrenzten Kettenlängenspektrum auszuwählen. Ebenso werden Verbindungen der allgemeinen Formeln (I) und (II) umfaßt, die einzelne, synthetisch gewonnene und damit reine Verbindungen (I) und/oder (II) umfassen. Beispielsweise können Alkyletherphosphate (I) und/oder (II) verwendet werden, deren Alkylrest R Fettalkoholen oder Fettalkoholgemischen entstammt, wie sie bei den bekannten Ziegler- und Oxo-Reaktionen entstehen.

In bevorzugten Ausführungsformen enthalten die erfindungsgemäßen Dispergiermittel ein oder mehrere Alkyletherphosphate der oben angegebenen allgemeinen Formeln (I) und/oder (II), in denen R für einen geradkettigen Alkyl- oder Alkenylrest steht. Dies ist besonders dann der Fall, wenn die der Synthese der Verbindungen der allgemeinen Formeln (I) und (II) zugrundeliegenden Fettalkohole (ROH) solche sind, die aus nativen Fetten und Ölen, beispielsweise über die Umesterung der Triglyceride mit Methanol und nachfolgende katalytische Hydrierung der Fettsäuremethylester, stammen. In den natürlichen Mischungen überwiegen die geradkettigen Reste R.

In einer weiteren Ausführungsform ist es als bevorzugt anzusehen, in den erfindungsgemäßen Dispergiermitteln solche Alkyletherphosphate zu verwenden, in denen R für einen geradkettigen Alkyl- oder Alkenylrest mit 12 bis 18 C-Atomen steht. Die im natürlichen Kettenlängenspektrum besonders häufig vorkommenden Alkyl- oder Alkenylreste mit 12 bis 18 C-Atomen haben - neben ihrer bequemen Verfügbarkeit - den weiteren wesentlichen Vorteil, daß sie Komponenten in Dispergiermitteln sein können, die besonders gute Ergebnisse in der Absenkung der Viskosität wäßriger Kohlesuspensionen liefern.

Die in den erfindungsgemäßen Dispergiermitteln enthaltenen Alkyletherphosphate der allgemeinen Formeln (I) und (II) können entweder als freie Säuren der Monoester (II) oder Diester (I) eingesetzt werden, wobei dann M in den angegebenen allgemeinen Formeln für Wasserstoff steht. Es können aber auch die entsprechenden wasserlöslichen Alkalimetall- Erdalkalimetall- und/oder Ammoniumsalze der jeweiligen freien Säuren Verwendung finden. In diesem Fall steht in den oben angegebenen allgemeinen Formeln M für ein Alkalimetall, ein Erdalkalimetall oder Ammonium. Als Alkalimetalle kommen bevorzugt Lithium, Natrium und Kalium, als Erdalkalimetalle Magnesium, Calcium und Strontium in Frage. Von den genannten Bedeutungen für M in den allgemeinen Formeln werden die Alkalimetalle, insbesondere Natrium, bevorzugt.

In den allgemeinen Formeln (I) und (II) stehen die Indizes m und n für Zahlen im Bereich von 1 bis 15. Die den Indizes entsprechende Zahl der Ethoxygruppen resultiert aus Umsetzungen der Fettalkohole mit Ethylenoxid, wobei m und n das Verhältnis Ethylenoxid : Alkohol angeben, das der Umsetzung zugrunde liegt. Bekanntlich entstehen im Zuge derartiger Umsetzungen nicht nur reine Substanzen, sondern auch Substanzgemische, die sich durch die Zahl der addierten Ethoxygruppen unterscheiden. m und n stellen daher nur durchschnittliche Werte dar und können in der Praxis ganze oder gebrochene Zahlen in dem angegebenen Bereich sein. In besonders bevorzugten Ausführungsformen enthalten die erfindungsgemäßen Dispergiermittel eine oder mehrere Verbindungen der allgemeinen Formeln (I) und/oder (II), in denen m und n für Zahlen im Bereich von 2 bis 12, besonders bevorzugt im Bereich von 8 bis 10 stehen.

Weiterhin ist es besonders bevorzugt, daß die Dispergiermittel gemäß der Erfindung ein oder mehrere Alkyletherphosphate der allgemeinen Formeln (I) und/oder (II) enthalten, in denen

| | |
|---|---|
| R | für geradkettige Alkyl- oder Alkenylreste mit 12 bis 18 C-Atomen, |
| M | für Natrium und |
| m und n | für Zahlen im Bereich von 8 bis 10 stehen. |

Derartige Mono- oder Diestersalze der Phosphorsäure sorgen - zusammen mit der Ligninsulfonsäure und/oder deren wasserlöslichen Salzen - für eine besonders deutliche Viskositätssenkung wäßriger Kohlesuspensionen trotz eines hohen Kohlegehaltes. Derartige wäßrige Suspensionen haben außerdem den erwünschten hohen Brennwert.

In bevorzugten Ausführungsformen der Erfindung enthalten die wäßrigen Dispergiermittel Ligninsulfonsäure und/oder deren Salze und ein oder mehrere Alkyletherphosphate der allgemeinen Formeln (I) und (II) in einem Gewichtsverhältnis im Bereich von 4 : 1 bis 20 : 1. Aufgrund der besonders guten Ergebnisse in der Absenkung der Viskosität wäßriger Kohlesuspensionen werden solche Dispergiermittel mit Vorteil verwendet, in denen Ligninsulfonsäure und/oder deren Salze und ein oder mehrere Alkyletherphosphate im Gewichtsverhältnis im Bereich von 4 : 1 bis 10 : 1 enthalten sind.

Neben den genannten Komponenten können die erfindungsgemäßen Dispergiermittel außerdem noch weitere, für die dispergierende Wirkung der Mittel nicht zwingend erforderliche Komponenten enthalten. Solche Komponenten können beispielsweise Stabilisatoren, Entschäumer, Biozide und/oder Korrosionsinhibitoren sein, die als solche für diesen Zweck bekannt sind und in aus dem Stand der Technik bekannten Dispergiermitteln ebenfalls Verwendung finden. So werden beispielsweise als Stabilisatoren Guar oder Guarderivate, Cellulose oder Cellulosederivate, Xanthan o.ä. zugesetzt. Die Entschäumer stammen aus der Gruppe der Propylenoxid- und/oder Ethylenoxid-Anlagerungsprodukte an Fettalkohole und/oder langkettige Fettsäuren, beispielsweise an Behensäure. Auch mit Vorteil verwendbare Biozide oder Korrosionsinhibitoren sind aus dem Stand der Technik bekannt.

Die erfindungsgemäßen Dispergiermittel werden nach an sich aus dem Stand der Technik bekannten Verfahren hergestellt. Dies geschieht beispielsweise in Kugelmühlen oder herkömmlichen Rührwerken. Dabei entstehen üblicherweise Pasten oder hochviskose Flüssigkeiten, die entweder als solche oder in Abmischungen mit Wasser, bevorzugt im Gewichtsverhältnis 1 : 1, konfektioniert werden.

Zur Herstellung wäßriger Kohlesuspensionen werden dann die in Pasten- oder hochviskoser Flüssigform konfektionierten Dispergiermittel in die wäßrige Phase eingerührt und sind dann üblicherweise darin in Mengen von 0,01 bis 5 Gew.-%, bezogen auf die Kohlemenge, enthalten.

Im gesamten angegebenen Konzentrationsbereich sorgen sie dann für eine deutliche Absenkung der Viskosität wäßriger Kohlesuspensionen, verglichen mit solchen Suspensionen, in denen Natriumligninsulfonat - wie aus dem Stand der Technik bekannt - als Additiv ohne weitere Zusätze verwendet wird. Derartige Suspensionen weisen Werte der Viskosität auf, mit denen sie durch Rohrleitungen oder Pipelines ohne Probleme gepumpt und den Verbrennungsöfen zugeführt werden können. Aufgrund des hohen, bei einem Wert von 65 % und höher liegenden Kohlegehaltes haben sie einen sehr guten Brennwert und machen dadurch die Verwendung derartiger wäßriger Kohlesuspensionen in Kraftwerken kostengünstig und wirtschaftlich.

Die Erfindung wird durch die nachfolgenden Beispiele näher erläutert.

Beispiele 1 bis 3

Eine deutsche Kohleprobe wurde auf eine durchschnittliche Teilchengröße 100 % < 200 µm zermahlen und mit Hilfe eines Siebes von gröberen Kohlepartikeln abgetrennt. Unter Verwendung von Natriumligninsulfonat (Quelle: Firma Lignin-Chemie, Waldhof-Holmen) und einer Mischung von Alkyletherphosphaten (Gemisch der Natriumsalze der Phosphorsäuremono- und -diester mit 8 bis 18 C-Atomen im Alkylrest und durchschnittlich 9,5 Ethoxygruppen (Quelle: Forlanit® P, Firma Henkel KGaA) wurden wäßrige Kohlesuspensionen mit einem Kohlegehalt von 65 % hergestellt. Die Konzentration an Dispergiermittel gemäß der Erfindung betrug 1 Gew.-%, bezogen auf die Kohlemenge.

Die scheinbare Viskosität der Suspensionen wurde in Abhängigkeit von der Schergeschwindigkeit mit einem Rotationsviskosimeter (Rheomat 30 der Firma Contraves) im Schergeschwindigkeitsbereich von 0 $s^{-1}$ bis 200 $s^{-1}$ gemessen.

Die Ergebnisse sind der nachfolgenden Tabelle zu entnehmen.

Tabelle

| Viskositäten wäßriger Kohlesuspensionen bei verschiedenen Schergeschwindigkeiten und Ligninsulfonat/Alkyl-etherphosphat-Verhältnissen | | | | |
|---|---|---|---|---|
| Bsp. | Verhältnis Ligninsulfonat : Alkyletherphosphat | Viskosität (mPa.s) | | |
| | | bei 50 $s^{-1}$ | bei 100 $s^{-1}$ | bei 200 $s^{-1}$ |
| 1 | 19 : 1 | 492 | 456 | 422 |
| 2 | 9 : 1 | 485 | 447 | 413 |
| 3 | 4 : 1 | 446 | 410 | 382 |
| vgl. | 1 : 0 | 500 | 456 | 477 |

Ergebnis:

Im gesamten Schergeschwindigkeitsbereich liegt die scheinbare Viskosität wäßriger Kohlesuspensionen deutlich niedriger als bei Verwendung des reinen Ligninsulfonats (vgl. nachfolgendes Vergleichsbeispiel).

Vergleichsbeispiel

Die Vorgehensweise aus den Beispielen 1 bis 3 wurde mit einem Dispergiermittel wiederholt, das als Additiv nur Natriumligninsulfonat enthielt. Das Ergebnis ist der vorangehenden Tabelle (unter "Vgl.") zu entnehmen.

**Patentansprüche**

**1.** Dispergiermittel mit einem Gehalt an Ligninsulfonsäure und/oder deren wasserlöslichen Salzen, dadurch gekennzeichnet, daß sie

(a) Ligninsulfonsäure und/oder deren Alkalimetall-, Erdalkalimetall- und/oder Ammoniumsalze,

(b) ein oder mehrere Alkyletherphosphate der allgemeinen Formeln (I) und/oder (II)

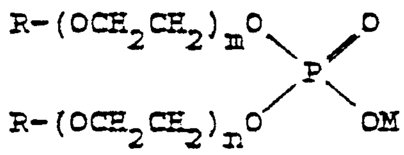

(I)

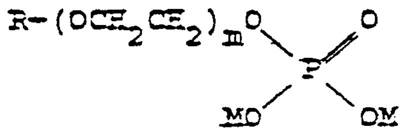

(II)

in denen

| | |
|---|---|
| R | für einen geradkettigen oder verzweigten Alkyl- oder Alkenylrest mit 8 bis 22 C-Atomen, |
| M | für Wasserstoff, Alkalimetall, Ammonium oder Erdalkalimetall und |
| m und n | für Zahlen im Bereich von 1 bis 15 stehen, und |

(c) gegebenenfalls weitere, in derartigen Dispergiermitteln übliche Hilfsstoffe enthalten.

2. Dispergiermittel nach Anspruch 1, dadurch gekennzeichnet, daß sie eine oder mehrere Verbindungen (I) und/oder (II) enthalten, in denen R für einen geradkettigen Alkyl- oder Alkenylrest mit 12 bis 18 C-Atomen steht.

3. Dispergiermittel nach Ansprüchen 1 und 2, dadurch gekennzeichnet, daß sie eine oder mehrere Verbindungen (I) und/oder (II) enthalten, in denen M für ein Alkalimetall, bevorzugt für Natrium, steht.

4. Dispergiermittel nach Ansprüchen 1 bis 3, dadurch gekennzeichnet, daß sie eine oder mehrere Verbindungen (I) und/oder (II) enthalten, in denen m und n für Zahlen im Bereich von 2 bis 12, bevorzugt von 8 bis 10 stehen.

5. Dispergiermittel nach Ansprüchen 1 bis 4, dadurch gekennzeichnet, daß sie eine oder mehrere Verbindungen (I) und/oder (II) enthalten, in denen R für einen geradkettigen Alkyl- oder Alkenylrest mit 12 bis 18 C-Atomen, M für Natrium und m und n für Zahlen im Bereich von 8 bis 10 stehen.

6. Dispergiermittel nach Ansprüchen 1 bis 5, enthaltend Ligninsulfonsäure und/oder deren Salze und ein oder mehrere Alkyletherphosphate in einem Gewichtsverhältnis im Bereich von 4 : 1 bis 20 : 1, bevorzugt im Bereich von 4 : 1 bis 10 : 1.

7. Dispergiermittel nach Ansprüchen 1 bis 6, dadurch gekennzeichnet, daß sie zusätzlich eine oder mehrere Verbindungen aus der Gruppe Stabilisatoren, Entschäumer, Biozide und Korrosionsinhibitoren enthalten.

8. Dispergiermittel nach Ansprüchen 1 bis 7, dadurch gekennzeichnet, daß sie in wäßrigen Kohlesuspensionen in Mengen von 0,01 bis 5 Gew.-%, bezogen auf die Kohlemenge, enthalten sind.

9. Verwendung der Dispergiermittel nach Ansprüchen 1 bis 8 in wäßrigen Kohlesuspensionen.

10. Verwendung der Dispersionen nach Ansprüchen 1 bis 8 zur Verringerung der Viskosität wäßriger Kohlesuspensionen.

## Claims

1. Dispersants containing lignin sulfonic acid and/or water-soluble salts thereof, characterized in that they contain

(a) lignin sulfonic acid and/or alkali metal, alkaline-earth metal and/or ammonium salts thereof,
(b) one or more alkyl ether phosphates corresponding to general formulae (I) and/or (II) below

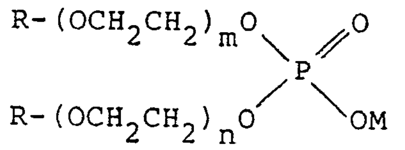

(I)

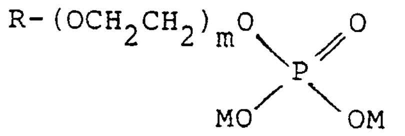

(II)

in which

R is a straight-chain or branched $C_8$-$C_{22}$ alkyl or alkenyl radical,

M is hydrogen, an alkali metal, ammonium or an alkaline-earth metal and

m and n are numbers of from 1 to 15,

and

(c) optionally, other auxiliaries of the type typically present in such dispersants.

**2.** Dispersants as claimed in Claim 1, characterized in that they contain one or more compounds (I) and/or (II), in which R is a straight-chain $C_{12}$-$C_{18}$ alkyl or alkenyl radical.

**3.** Dispersants as claimed in Claims 1 and 2, characterized in that they contain one or more compounds (I) and/or (II), in which M is an alkali metal, preferably sodium.

**4.** Dispersants as claimed in Claims 1 to 3, characterized in that they contain one or more compounds (I) and/or (II), in which m and n are numbers in the range from 2 to 12 and preferably in the range from 8 to 10.

**5.** Dispersants as claimed in Claims 1 to 4, characterized in that they contain one or more compounds (I) and/or (II), in which R is a straight-chain $C_{12}$-$C_{18}$ alkyl or alkenyl radical, M is sodium and m and n are numbers of from 8 to 10.

**6.** Dispersants as claimed in Claims 1 to 5 containing lignin sulfonic acid and/or salts thereof and one or more alkyl ether phosphates in a ratio by weight of from 4 : 1 to 20 : 1 and preferably of from 4 : 1 to 10 : 1.

**7.** Dispersants as claimed in Claims 1 to 6, characterized in that they additionally contain one or more compounds from the group comprising stabilizers, foam inhibitors, biocides and corrosion inhibitors.

**8.** Dispersants as claimed in Claims 1 to 7, characterized in that they are present in aqueous coal suspensions in quantities of from 0.01 to 5% by weight, based on the quantity of coal.

**9.** The use of the dispersants claimed in Claims 1 to 8 in aqueous coal suspensions.

**10.** The use of the dispersions claimed in Claims 1 to 8 for reducing the viscosity of aqueous coal suspensions.

## Revendications

**1.** Agents dispersants avec une teneur en acides lignosulfoniques et/ou leurs sels hydrosolubles caractérisés en ce qu'ils contiennent

a) des acides lignosulfoniques et/ou leurs sels de métaux alcalins, de métaux alcalino-terreux ou d'ammonium,

b) un ou plusieurs alkylétherphosphates des formules générales (I) et/ou (II)

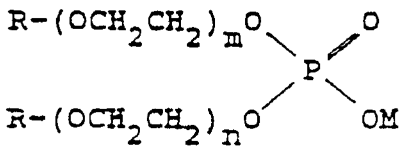

(I)

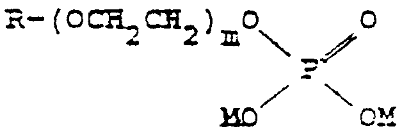

(II)

dans lesquelles

- R désigne un radical alkyle ou alcényle à chaîne droite ou ramifiée avec 8 à 22 atomes de C,
- M désigne de l'hydrogène, un métal alcalin, de l'ammonium ou un métal alcalino-terreux et
- m et n désignent des nombres de l'ordre de 1 à 15

et

(c) éventuellement, d'autres additifs courants dans de tels agents dispersants.

**2.** Agents dispersants selon la revendication 1, caractérisés en ce qu'ils contiennent un ou plusieurs composés (I) et/ou (II) dans lesquels R désigne un radical alkyle ou alcényle à chaîne droite avec 12 à 18 atomes C.

**3.** Agents dispersants selon les revendications 1 ou 2 caractérisés en ce qu'ils contiennent un ou plusieurs composés (I) et/ou (II) dans lesquels M désigne un métal alcalin, de préférence le sodium.

**4.** Agents dispersants selon les revendications 1 à 3 caractérisés en ce qu'ils contiennent un ou plusieurs composés (I) et/ou (II) dans lesquels m et n désignent des nombres de l'ordre de 2 à 12, de préférence de 8 à 10.

**5.** Agents dispersants selon les revendications 1 à 4 caractérisés en ce qu'ils contiennent un ou plusieurs composés (I) et/ou (II) dans lesquels R désigne un radical alkyle ou alcényle à chaîne droite avec 12 à 18 atomes C, M le sodium et m et n des nombres de l'ordre de 8 à 10.

**6.** Agents dispersants selon les revendications 1 à 5 contenant des acides lignosulfoniques et/ou leurs sels et un ou plusieurs alkylétherphosphates dans un rapport pondéral de l'ordre de 4 : 1 à 20 : 1, de préférence de l'ordre de 4 : 1 à 10 : 1.

**7.** Agents dispersants selon les revendications 1 à 6 caractérisés en ce qu'ils contiennent en outre un ou plusieurs composés du groupe des stabilisateurs, des agents antimousse, des biocides et des inhibiteurs de corrosion.

**8.** Agents dispersants selon les revendications 1 à 7 caractérisés en ce qu'ils sont contenus dans des suspensions aqueuses de charbon dans des quantités de 0,01 à 5 % en poids par rapport à la quantité de charbon.

**9.** Mise en oeuvre d'agents dispersants selon les revendications 1 à 8 dans des suspensions aqueuses de charbon.

**10.** Mise en oeuvre de dispersions selon les revendications 1 à 8 pour réduire la viscosité de suspensions aqueuses de charbon.